# FASCICULE DE BREVET EUROPEEN

(11) **EP 4 264 182 B1**
(45) Date de publication et mention de la délivrance du brevet: **22.07.2026**
(21) Numéro de dépôt: 21839966.5
(22) Date de dépôt: 16.12.2021
(51) Int. Cl.: G01C 21/20, G06Q 10/04, G05D 1/00, G08G 5/00, G01C 21/34, G06Q 10/047, G08G 5/22, G08G 5/26, G08G 5/32, G08G 5/55, G08G 5/57, G08G 5/59

(54) **PROCÉDÉ DE CALCUL DE CHEMIN, PRODUIT PROGRAMME D'ORDINATEUR, SUPPORT D'INFORMATIONS ET DISPOSITIF ASSOCIÉS**
VERFAHREN ZUR BERECHNUNG EINES PFADES, ZUGEHÖRIGES COMPUTERPROGRAMMPRODUKT, INFORMATIONSMEDIUM UND VORRICHTUNG
METHOD FOR COMPUTING A PATH, ASSOCIATED COMPUTER PROGRAM PRODUCT, INFORMATION MEDIUM AND DEVICE

(30) Priorité: 18.12.2020 FR 2013662
(43) Date de publication de la demande: 25.10.2023
(73) Titulaire: THALES, 92400 Courbevoie (FR)
(72) Inventeur: KAZMIEROWSKI, Alexandre, 91767 PALAISEAU CEDEX (FR); DUQUEROIE, Bertrand, 91767 PALAISEAU CEDEX (FR); BONNE, Jean-Benoit, 91767 PALAISEAU CEDEX (FR); DURAND, Rémi, 92230 GENNEVILLIERS (FR)
(74) Mandataire: Lavoix
(86) Numéro de dépôt international: PCT/EP2021/086181
(87) Numéro de publication internationale: WO 2022/129325

(56) Documents cités:
- US-A1- 2008 021 635
- US-A1- 2017 310 595

## Description

La présente invention concerne un procédé de calcul de chemin. La présente invention concerne également un produit programme d'ordinateur, un support d'information et un dispositif électronique de calcul de chemin associés.

Des procédés de calcul de chemins sont utilisés dans de nombreuses applications, par exemple pour calculer un chemin optimal pour un véhicule ou un piéton dans un environnement donné, depuis un point de départ jusqu'à un point d'arrivée. De tels procédés sont basés sur des algorithmes de sélection de plus court chemins, ces algorithmes étant mis en œuvre sur des graphes, c'est-à-dire des structures de données générées à partir de cartographies de l'environnement. Les cartographies de l'environnement sont divisées en un ensemble de cellules modélisant les différents emplacements composant l'environnement, les frontières entre ces cellules modélisant les liaisons entre ces emplacements, et indiquant en particulier la possibilité pour le véhicule ou le piéton de passer d'une cellule à une autre à travers la frontière entre ces cellules.

On connait par exemple de US 2008/021635 A1, un procédé de détermination de chemin entre un point de départ et un point d'arrivée dans un environnement.

US 2017/0310595 A1 concerne un procédé d'équilibrage de charge dans des réseaux.

De tels procédés de calcul sont notamment bien connus pour calculer des chemins sur des réseaux de transport tels que des réseaux routiers ou des réseaux de canaux, et sont très adaptés puisque ces réseaux présentent relativement peu de liaisons entre les différentes cellules. En effet, il n'est pas prévu dans ces réseaux que le véhicule ou la personne empruntant le réseau sorte de la route ou du canal dans laquelle il se trouve, ce qui limite la complexité du calcul à effectuer puisque les véhicules ne peuvent se déplacer que selon un seul axe dans chaque portion du réseau.

Cependant, de tels procédés sont peu adaptés au calcul de chemins dans des environnements ouverts. En effet, de tels environnements ouverts permettent un nombre de trajectoires beaucoup plus grand que les réseaux de transport, et requièrent donc un grand nombre de cellules pour être modélisés avec une bonne précision, chaque cellule présentant en moyenne des frontières communes avec un nombre de cellules voisines plus élevé que dans le cas des réseaux de transports. Aussi, lorsque l'environnement est de grande dimensions, le calcul du chemin le plus court est complexe et long.

Il est notamment entendu par « environnement ouverts» un environnement dans lequel le mouvement des personnes ou des véhicules n'est pas contraint par des routes ou des canaux pré-existants, mais dans lesquels ces personnes ou véhicules peuvent se déplacer librement, notamment selon au moins deux directions.

En conséquence, les procédés de l'état de la technique ne permettent pas de calculer rapidement des chemins dans des environnements ouverts précis de grandes dimensions, lorsque ces environnements ne sont pas formés de portions dans lesquels le déplacement n'est possible que selon un axe. C'est notamment le cas dans des environnements en trois dimensions, par exemple lorsqu'il est nécessaire de calculer un chemin pour un dispositif ou un véhicule volant.

Il existe donc un besoin pour un procédé de calcul d'un chemin entre deux points d'un environnement, qui permette de calculer plus rapidement un chemin court entre ces deux points que les procédés de l'état de la technique.

A cet effet, il est proposé un procédé de détermination selon la revendication 1.

Selon des modes de réalisation avantageux, le procédé est selon l'une quelconque des revendications 2 à 10.

Il est également proposé un produit programme d'ordinateur selon la revendication 11.

Il est également proposé un support d'informations selon la revendication 12.

Il est également proposé un dispositif électronique de calcul selon la revendication 13.

Des caractéristiques et avantages de l'invention apparaîtront à la lecture de la description qui va suivre, sonnée uniquement à titre d'exemple non limitatif, et faite en référence aux dessins annexés, sur lesquels :
[Fig 1] la figure 1 est un schéma d'un ensemble comportant un dispositif électronique de calcul et un dispositif mobile,
[Fig 2] la figure 2 est un ordinogramme des étapes d'un procédé de calcul de chemin dans un environnement, mis en œuvre par le dispositif de calcul de la figure 1,
[Fig 3] la figure 3 est une représentation schématique d'un exemple d'environnement pour la mise en œuvre du procédé de la figure 2,
[Fig 4] la figure 4 est une représentation schématique d'une cartographie de l'environnement de la figure 3,
[Fig 5] la figure 5 est une représentation schématique d'une cartographie partielle de l'environnement de la figure 3,
[Fig 6] la figure 6 est une représentation schématique d'une autre cartographie partielle de l'environnement de la figure 3,
[Fig 7] la figure 7 est une représentation schématique d'une autre cartographie partielle de l'environnement de la figure 3, et
[Fig 8] la figure 8 est une représentation schématique d'encore une autre cartographie partielle de l'environnement de la figure 3.

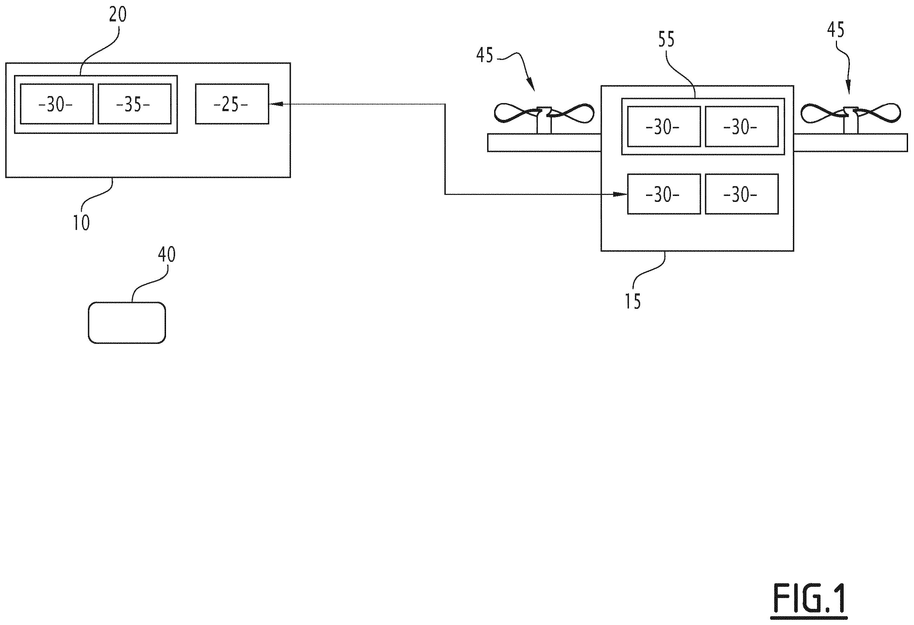

Un dispositif électronique 10 et un dispositif mobile 15 sont représentés sur la figure 1.

Le dispositif électronique 10 est configuré pour mettre en œuvre un procédé de détermination d'au moins un chemin qu'une entité mobile, par exemple le dispositif mobile 15, devra ultérieurement emprunter.

Le dispositif électronique 10 comporte un premier contrôleur 20 et un premier module de communication 25.

Le premier contrôleur 20 est propre à manipuler et modifier des données sous la forme de signaux électriques. Les termes « contrôleur » et « unité de traitement d'informations » ou « unité de traitement de données » seront considérés comme synonymes dans la présente description.

Le premier contrôleur 20 est prévu pour manipuler une pluralité de cartographies C d'un environnement E.

Le premier contrôleur 20 comporte un premier processeur 30 et une première mémoire 35.

La première mémoire 35 contient un premier produit programme d'ordinateur.

Le premier produit programme d'ordinateur contient des instructions logicielles configurées pour provoquer la mise en œuvre du procédé précité lorsque les instructions logicielles sont exécutées sur le premier processeur 30.

Le premier produit programme d'ordinateur a, par exemple, été copié antérieurement dans la première mémoire 35 à partir d'un support lisible d'informations 40.

Un support lisible d'informations 40 est un support lisible par le dispositif 10, usuellement par le premier contrôleur 20. Le support lisible d'informations 40 est un médium adapté à mémoriser des instructions électroniques et capable d'être couplé à un bus d'un dispositif informatique.

A titre d'exemple, le support lisible d'informations 40 est un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations 40 est mémorisé le premier programme comprenant des instructions de programme.

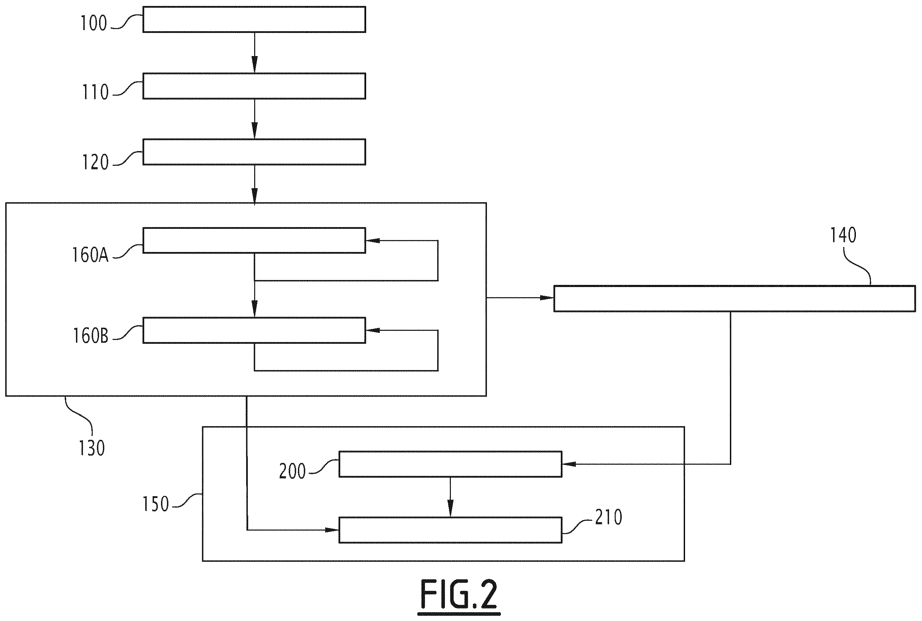

Selon une variante, le premier contrôleur 20 est formé par un ou des circuit(s) intégré(s) dédié(s), ou encore par un ensemble de composants logiques programmables, tout en restant configuré pour mettre en oeuvre le procédé de détermination de chemin qui sera décrit en référence à la figure 2.

L'environnement E est un environnement ouvert, par exemple un espace extérieur tel qu'une ville ou une région géographique donnée.

L'environnement E est, notamment, un environnement tridimensionnel. Par exemple, l'environnement E comprend un sol, un ensemble de structures S dépassant du sol telles que des arbres, des bâtiments ou d'autres types de constructions, et l'espace aérien surplombant le sol jusqu'à une altitude prédéterminée.

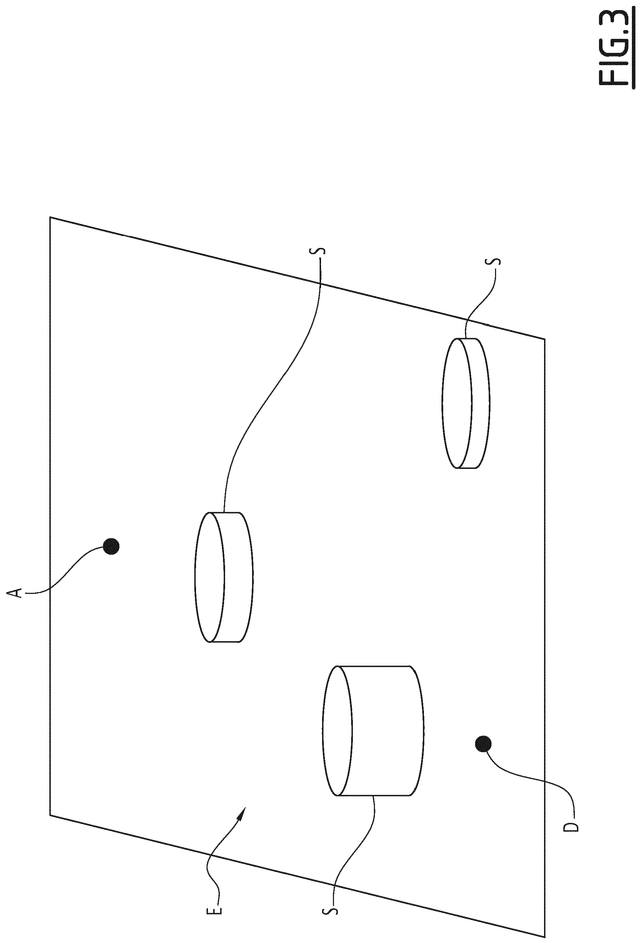

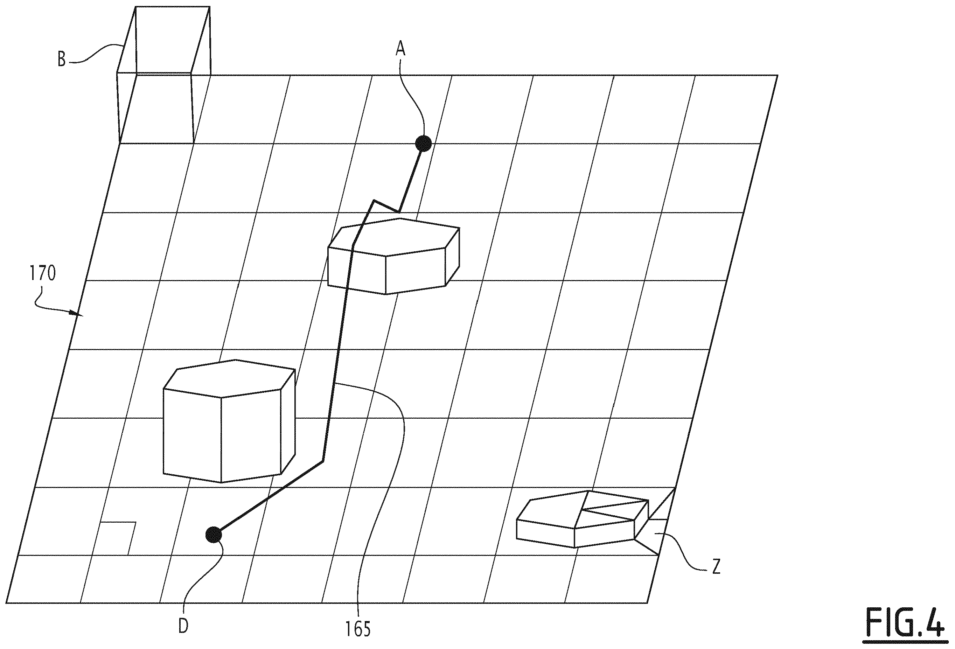

Un exemple d'environnement E comportant un sol plat et trois structures S est représenté sur la figure 3, et des cartographies de cet environnement E sont représentées sur les figures 4 à 8. Il est à noter que cet exemple d'environnement E est un exemple très simplifié afin de permettre une compréhension claire des figures 4 à 8. Par exemple, le sol est susceptible de ne pas être plat, et le nombre de structures S d'être très élevé.

Il est entendu par « cartographie », une représentation totale ou partielle de l'environnement E dans la mémoire 35 du dispositif 10.

Chaque cartographie est, par exemple, une cartographie tridimensionnelle. Toutefois, des modes de réalisation dans lesquels chaque cartographie est une cartographie bidimensionnelle sont également envisageables.

Il est défini une taille pour chaque cartographie. La taille d'une cartographie bidimensionnelle est la surface de la portion de l'environnement E qui est cartographiée, et la taille d'une cartographie tridimensionnelle est le volume de la portion de l'environnement E qui est cartographiée.

Chaque cartographie est divisée, de manière connue en soi, en un ensemble de zones Z. De telles zones sont également appelées «cellules ».

Par exemple, la cartographie est divisée en un ensemble de blocs B de cellules, chaque bloc comportant une pluralité de cellules Z.

Chaque cellule Z délimite une portion de l'environnement E, cette portion étant susceptible d'accueillir une entité mobile telle que le dispositif mobile 15, notamment d'être parcourue par l'entité.

Par exemple, de manière connue en soi, certains contours de certaines cellules Z correspondent aux contours des structures S, de manière à ce que les structures S ne soient pas incluses dans la cartographie.

Chaque cellule Z est incluse dans un unique bloc B correspondant. En d'autres termes, aucune cellule Z n'est incluse partiellement dans deux blocs B.

Chaque cellule Z est, par exemple, polygonale. En particulier, chaque cellule Z est polygonale et convexe.

**Selon des** modes de réalisation envisageables, chaque cellule Z est parallélépipédique, notamment cubique.

Il est entendu par « convexe » que tout segment reliant deux points d'un polygone est inclus dans le polygone considéré.

Les cartographies contenant des zones polygonales sont connues en soi, et fréquemment dénommées « maillage de navigation » ou « mesh de navigation » (de l'Anglais « Navigational mesh »). Les cellules Z polygonales sont parfois nommées « polygones de navigation » ou « polynavs ».

Chaque cellule Z est délimitée par une face ou par un ensemble de faces, chaque face étant notamment un segment de droite si la cellule Z est polygonale.

Il est défini une dimension pour chaque cellule.

La dimension de la cellule Z est une valeur caractérisant la quantité de l'environnement E qui est incluse dans la cellule Z.

La dimension de la cellule Z est, par exemple, un volume de la potion de l'environnement E qui est incluse dans la cellule Z si l'environnement E est tridimensionnel, ou une surface de cette portion si l'environnement E est bidimensionnel.

Lorsque chaque cellule est cubique, la dimension est, par exemple, la longueur de chaque côté de la cellule.

Chaque cartographie présente une dimension moyenne de cellule. La dimension moyenne est, par exemple, une moyenne arithmétique ou géométrique des dimensions des cellules Z.

Optionnellement, les dimensions des différentes cellules Z d'une même cartographie sont identiques. Dans ce cas, la dimension moyenne est égale à la dimension de chaque cellule Z.

Les dimensions des cellules Z sont notamment identiques lorsque les cellules présentent une forme telle que la cartographie est formée par un réseau régulier de cellules Z identiques, par exemple lorsque toutes les cellules Z sont superposables les unes aux autres.

De nombreuses formes de cellules Z, notamment polygonales, permettent un tel réseau régulier de cellules Z, par exemple la forme cubique mentionnée précédemment.

Il est en outre à noter que chaque cellule Z est, de manière avantageuse mais facultative, associée dans la mémoire 35 à un ensemble de caractéristiques de la portion de l'environnement E délimitée par la cellule Z et devant être prises en compte lors du calcul d'un chemin. Cet ensemble de caractéristiques est en général nommé « annotation ».

Par exemple, une caractéristique d'une cellule Z est le fait qu'elle contient une portion particulière de l'environnement E, par exemple une portion que l'entité doit préférentiellement éviter ou au contraire une portion que l'entité doit préférentiellement visiter, par exemple parce qu'aucune restriction au passage de l'entité dans cette portion de l'environnement E n'existe.

Chaque caractéristique est associée dans la mémoire 35, par exemple, à une valeur chiffrée (ou « poids »), la valeur étant d'autant plus haute qu'il est souhaitable d'éviter la cellule Z considérée.

Par exemple, si la cellule Z contient ou est située à proximité immédiate d'un hôpital ou d'une école (par exemple au-dessus), il est parfois préférable que l'entité évite de se déplacer dans la cellule Z de manière à éviter tout risque pour ces bâtiments et leurs occupants en cas d'accident. Une cellule Z contenant ou située au-dessus d'un terrain vague ou d'un champ, au contraire, peut être parcourue librement, de même qu'une cellule au-dessus d'une route.

Dans ce cas, les cellules Z à proximité des écoles ou hôpitaux seront associées en mémoire à une valeur par exemple de 1000, celles situées à proximité de terrains vagues ou de forêts à une valeur de 1, et celles correspondant aux routes à une valeur de 2 (puisqu'un accident qui impliquerait une route reste plus risqué pour des passants que s'il implique un terrain vague).

Une autre caractéristique possible est liée à la proximité de la cellule Z à l'obstacle le plus proche, et la valeur associée est par exemple d'autant plus élevée que l'obstacle est proche.

Encore une autre caractéristique est le fait que la cellule Z soit dans le champ de perception d'un dispositif de détection que l'on souhaite éviter, tel qu'un radar ou une caméra. Dans ce cas, les cellules contenues au moins partiellement dans le champ de perception sont associées à des valeurs plus élevées que les autres.

En complément facultatif, une caractéristique est relative à la qualité d'une liaison de données, dans la cellule Z, entre l'entité et un poste de commande tel que le dispositif de calcul 10. La valeur associée est par exemple d'autant plus élevée que la qualité de la liaison est faible.

Optionnellement, au moins une cellule Z est associée à une caractéristique indiquant le fait que la cellule Z est susceptible d'accueillir l'entité mobile ou non. Par exemple, une cellule Z comportant un obstacle peut être associée à une caractéristique « infranchissable ». Selon un mode de réalisation, une cellule Z dont au moins une portion contient un obstacle est considérée comme infranchissable. En variante, une cellule Z dont au moins une portion est dépourvue d'obstacle est considérée comme franchissable.

Une autre caractéristique est fonction d'une vitesse du vent dans la cellule Z, déterminée à partir de données météorologiques ou par une simulation numérique. La valeur associée est alors d'autant plus élevée que la vitesse du vent est forte, mais peut dépendre d'une sensibilité au vent de l'entité, par exemple d'un poids et/ou de dimensions ou de formes de l'entité.

L'association de ces caractéristiques aux premières zones est connue en soi et n'est pas décrite plus en détails.

Il est à noter que ces valeurs sont susceptibles de varier. En particulier, des cas où les zones à éviter sont associées à des valeurs basses et non à des valeurs élevées sont également envisageables.

En outre, il est à noter que la caractérisation des différentes portions de l'environnement E comme étant à éviter ou non est susceptible de varier selon les circonstances. Par exemple, un chemin calculé pour un drone de loisir électrique, léger et silencieux, est susceptible de passer plus près d'un hôpital ou d'une école qu'un chemin calculé pour un drone de grandes dimensions, bruyant et potentiellement chargé d'un carburant inflammable.

Les blocs B sont, par exemple, formés par l'intersection d'une grille et de l'environnement E.

En particulier, la grille est superposée à l'environnement E, chaque portion de l'environnement E délimitée par la grille formant un bloc B, qui est ensuite subdivisé en une pluralité de cellules Z.

La grille est une grille bidimensionnelle lorsque l'environnement E est bidimensionnel, et tridimensionnelle si l'environnement E est tridimensionnel.

La grille est, notamment, une grille régulière, dont les mailles sont superposables les unes aux autres.

La grille est, par exemple, une grille à maille carrée ou cubique, chaque maille délimitant un bloc B. Il est à noter que d'autres formes de maille sont envisageables, par exemples des polygones tels que des hexagones ou des prismes.

La division d'une cartographie en blocs réguliers eux-mêmes subdivisés en polygones est appelée parfois « approche tilée », de l'Anglais « tile » signifiant « case », et permet de simplifier la gestion de la cartographie, notamment si la cartographie est modifiée, puisque seules les cellules incluses dans certains blocs doivent alors être modifiées.

Le premier module de communication 25 est configuré pour échanger des informations avec le dispositif mobile 15, par exemple par ondes radiofréquences.

Par exemple, le premier module de communication 25 utilise un réseau de téléphonie mobile cellulaire, ou encore une liaison radiofréquence fonctionnant en ligne de vue.

Le dispositif mobile 15 est configuré pour se déplacer dans un environnement E.

Le dispositif mobile 15 est, par exemple, un dispositif 15 autonome, configuré pour se déplacer sans intervention humaine.

Le dispositif mobile 15 est, par exemple, configuré pour se déplacer dans au moins deux dimensions, notamment trois dimensions. En particulier, le dispositif 15 est un dispositif 15 volant.

Selon un mode de réalisation, le dispositif 15 est un drone. En variante, le dispositif 15 est un véhicule.

Le dispositif mobile 15 comporte au moins un moyen de déplacement 45, un deuxième module de communication 50, un deuxième contrôleur 55 et un module de pilotage 60.

Chaque moyen de déplacement 45 est configuré pour générer une force tendant à déplacer le dispositif mobile 15 dans l'environnement E. Un ensemble d'un moteur et d'une hélice entraînée par le moteur est un exemple de moyen de déplacement 45. Un moteur à réaction est un autre exemple de moyen de déplacement 45, comme l'est un ensemble d'un moteur et d'un essieu portant deux roues et entraîné par le moteur.

Il est à noter que le nombre et la disposition du ou des moyens de déplacement 45 sont susceptible(s) de varier.

Le deuxième module de communication 50 est configuré pour échanger des informations avec le premier module de communication 25.

Le deuxième contrôleur 55 comporte un deuxième processeur 65 et une deuxième mémoire 70.

La deuxième mémoire 70 contient un deuxième produit programme d'ordinateur.

Le deuxième produit programme d'ordinateur contient des instructions logicielles configurées pour contrôler le ou les moyen(s) de déplacement 45 lorsque les instructions logicielles sont exécutées sur le deuxième processeur 65.

Le module de pilotage 60 est configuré pour piloter le dispositif mobile 15 pour déplacer le dispositif mobile 15 le long d'un chemin prédéterminé.

Par exemple, le module de pilotage 60 est formé par l'exécution des instructions logicielles contenues dans la deuxième mémoire 70 sur le deuxième processeur 65.

Il est à noter que selon certaines variantes envisageables, l'entité mobile n'est pas un dispositif, mais est par exemple un individu, ou encore est un véhicule piloté par un individu en fonction du chemin transmis par le dispositif de calcul 10.

Un procédé de détermination d'un chemin dans l'environnement E va maintenant être décrit en référence à la figure 2, qui présente un ordinogramme des étapes d'un exemple de ce procédé.

Le procédé comporte une première étape 100, une étape 110 de requête, une phase 120 d'initialisation, une phase 130 d'optimisation, une étape 140 de calcul d'un chemin provisoire et une phase 150 de déplacement.

Au cours de la première étape 100, un ensemble de données est chargé dans le premier contrôleur 20.

L'ensemble de données comporte, par exemple, un ensemble de cartographies totales de l'environnement E.

Chaque cartographie totale est une cartographie de l'ensemble de l'environnement E. En d'autres termes, chaque cartographie totale est une représentation de l'ensemble des zones de l'environnement E qui sont susceptibles de permettre le passage de l'entité mobile, notamment du dispositif mobile 15.

Il est défini une pluralité de niveaux successifs de cartographie distincts.

Les niveaux sont ordonnés, la pluralité de niveaux comprenant au moins un premier niveau et un deuxième niveau, et optionnellement un troisième, un quatrième, etc.

Dans l'exemple représenté sur les figures, le nombre de niveaux est égal à trois.

Toutefois, ce nombre est susceptible de varier. Le nombre de niveaux est, par exemple, compris entre 2 et 15, par exemple choisi entre 5 et 6.

Chaque niveau de cartographie est défini par une dimension moyenne différente de la dimension moyenne des autres niveaux de cartographie.

En particulier, la dimension moyenne diminue d'un niveau au suivant. Ainsi, la dimension moyenne du premier niveau est strictement supérieure à celle du deuxième niveau, et ainsi de suite.

Avantageusement, deux niveaux successifs sont tels que, pour tout point de chacune des cartographies de ces deux niveaux, la cellule de la cartographie du niveau le plus bas parmi ces deux niveaux présente une dimension inférieure ou égale, notamment strictement inférieure, à la dimension de la cellule de la cartographie du niveau le plus haut parmi ces deux niveaux.

Par exemple, un rapport entre les dimensions moyennes de deux niveaux successifs est compris entre 2 et 10.

Selon un mode de mise en œuvre envisageable, des niveaux successifs avec des dimensions moyennes de 1000 mètres (m), 500 m, 200 m, 100 m et 50 m sont utilisés, par exemple pour des environnements E de grandes dimension. En variante, par exemple pour des environnements E de petites dimensions, des niveaux présentant des dimensions moyennes de 200 m, 100 m, 50 m, 20 m, 10 m et 5 m sont choisis.

Il est à noter que les dimensions moyennes des différents niveaux sont susceptibles de varier.

Il est défini au moins un niveau circulable et au moins un niveau non circulable.

Un niveau circulable est un niveau présentant une précision suffisante par rapport à un ou des critères établis par un utilisateur du système.

Un niveau non circulable est, par exemple, un niveau dont la précision est telle qu'il est considéré qu'un chemin calculé à partir d'une cartographie du premier niveau n'est pas suffisamment sécurisé pour permettre au dispositif mobile 15 de se déplacer le long du chemin en sécurité. Par exemple, la taille des cellules Z des cartographies de chaque niveau non circulable ne permet pas de représenter suffisamment précisément tous les obstacles pour que le dispositif mobile 15 puisse éviter ces derniers.

En variante ou en complément, un niveau non circulable est un niveau pour lequel le chemin calculé n'est pas suffisamment optimisé, par exemple est trop éloigné du meilleur chemin possible.

Au moins le premier niveau de cartographie est un niveau non circulable.

Chaque niveau circulable est un niveau vérifiant le ou les critères établis par l'utilisateur.

En particulier, chaque niveau qui n'est pas un niveau circulable est un niveau non circulable.

Un exemple de niveau circulable est un niveau considéré comme suffisamment détaillé pour permettre au dispositif mobile 15 de se déplacer en sécurité le long d'un chemin calculé à partir d'une cartographie du dernier niveau. Par exemple, la taille des cellules Z des cartographies des niveaux non circulables permet de représenter suffisamment précisément les obstacles pour que le dispositif mobile 15 puisse éviter ces derniers.

Au moins le dernier niveau de cartographie est circulable. Optionnellement, au moins un autre niveau est circulable.

Il est à noter que la dimension des cellules Z des niveaux circulables ou non est susceptible de varier selon les cas, par exemple elle peut être de l'ordre de 5 m ou 10m dans des environnements E présentant de nombreux obstacles proches les uns des autres tels que des villes, et plus grande dans des déserts ou des plaines.

En outre, chaque cellule Z de chaque cartographie totale est annotée, et ainsi associée aux caractéristiques correspondantes dans la première mémoire 35.

Selon un mode de réalisation, pour au moins un niveau de cartographie, chaque cellule Z dont au moins une portion est dépourvue d'obstacle est considérée comme franchissable, tandis que pour au moins un niveau postérieur au niveau considéré chaque cellule Z dont au moins une portion contient un obstacle est considérée comme infranchissable.

Au cours de l'étape de requête 110, une requête de calcul d'un chemin, dans l'environnement E, entre un point de départ D et un point d'arrivée A, est transmise au dispositif de calcul 10.

Par exemple, la requête est transmise au dispositif de calcul 10 par le dispositif mobile 15. En variante, la requête est générée par un dispositif de commande d'un ou plusieurs dispositif(s) mobile(s) 15, ce dispositif étant distant du ou des dispositif(s) mobile(s) 15.

La requête est mémorisée dans la première mémoire 35.

La requête est une requête de calcul d'un chemin destiné à être parcouru par une entité, notamment par le dispositif mobile 15.

La requête comporte au moins un identifiant du point de départ D et un identifiant du point d'arrivée A.

Il est entendu par « identifiant » une information, ou un ensemble d'informations, propre à permettre au dispositif 10 d'identifier le point de départ D ou le point d'arrivée A.

L'identifiant comporte, par exemple, des coordonnées spatiales du point de départ D ou du point d'arrivée A, par exemple une latitude, une longitude et/ou une altitude de ce point.

En variante, l'identifiant est propre à permettre au dispositif de calcul 10 d'identifier le point de départ D ou le point d'arrivée A dans une liste de points stockée dans la première mémoire 35 et associant les coordonnées de chaque point mémorisé à l'identifiant correspondant.

La requête comporte également, optionnellement, au moins une information relative à une contrainte à prendre en compte dans le calcul du chemin.

Par exemple, la requête comprend des indications propres à permettre au premier contrôleur 20 de déterminer la ou les valeurs associées aux différentes annotations des différentes cellules.

Ces indications sont fréquemment rassemblées sous l'expression « fonction de coût ».

Par exemple, la fonction de coût est propre à permettre de déterminer une valeur à associer, dans la mémoire 35, à différentes vitesses de vent, à différents niveaux de qualité de la liaison de donnée, à différentes altitudes par rapport au sol, à différents types de terrains survolés (école, rue, rivière, etc) ou encore à différents niveaux de perception par le détecteur (par exemple à différents niveaux de puissance d'un signal radar dans la cellule considérée).

Selon un mode de réalisation, une valeur obtenue par une fonction de hachage est utilisée pour calculer une empreinte permettant d'identifier les points de départ et d'arrivée A et D ainsi que les contraintes associées à la requête. Ainsi, des requêtes concernant les mêmes points A et D et présentant les mêmes contraintes sont aisément identifiées.

Au cours de la phase d'initialisation 120, un chemin initial 165 entre le point de départ D et le point d'arrivée A est déterminé par le premier contrôleur 20.

Le chemin initial 165 est déterminé par le premier contrôleur 20 à partir d'une première cartographie 170.

Un exemple de première cartographie 170 de l'environnement E est représenté sur la figure 4.

Afin de ne pas surcharger la figure 4, seule l'intersection des blocs B avec le sol est représentée sur la figure 4, ainsi que sur les figures suivantes. Les blocs B qui ne sont pas en contact avec le sol ne sont donc pas représentés.

En outre, les contours complets d'un unique bloc B sont représentés.

Pour la même raison, seule l'intersection des cellules Z avec le sol ou avec une structure S sont représentées, pour un unique bloc B.

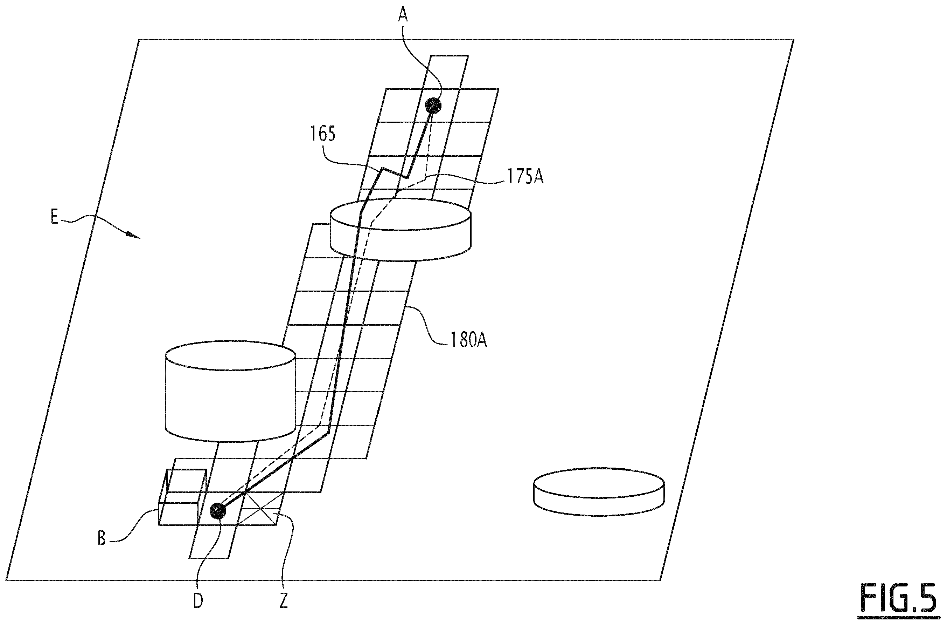

Par ailleurs, puisque la cartographie 170 est divisée en un ensemble de cellules Z, et que celles-ci sont polygonales, les contours des structures S sont représentés dans la cartographie 170 par des segments de droites, de sorte que les structures S apparaissent également comme étant polygonales dans la cartographie 170. C'est en fait le cas dans toutes les cartographies qui seront traitées par le premier contrôleur 20, même si, afin de simplifier ces dernières, les contours des structures S n'ont pas été modifiés dans les figures 5 à 8.

Il est à noter que des modes de réalisation dans lesquels des cellules Z ne seraient pas parallélépipédiques voire non polygonales mais présenteraient par exemple des contours courbes sont également envisageable, et dans ce cas la forme des structures S dans les cartographies variera en conséquence. Il est à noter que l'algorthime Field A* fonctionne très bien avec des cellules parallélépipédiques, et que celles-ci sont donc souvent privilégiées.

La première cartographie 170 est une cartographie du premier niveau.

En particulier, la première cartographie 170 est la cartographie totale du premier niveau. L'environnement E est alors défini par le fait qu'il est entièrement cartographié dans la première cartographie 170.

En variante, la première cartographie 170 est une cartographie d'une partie de l'environnement E, cette partie contenant entièrement un segment de droite reliant le point de départ D au point d'arrivée A. Par exemple, la première cartographie 170 est une cartographie d'un tube centré sur ce segment de droite. Le diamètre du tube est susceptible de varier, notamment pour prendre en compte des zones annotées de grandes dimensions, par exemple si un détecteur de grande portée observe une partie de l'environnement E. Dans ce cas, le diamètre du tube est, par exemple, au moins double de la portée du détecteur.

Le chemin initial 165 est déterminé à partir d'un premier graphe de la première cartographie 170.

Il est entendu par « graphe » une structure de données formée de nœuds reliés deux à deux par des arêtes. De tels graphes sont fréquemment utilisés pour représenter des environnements, par exemple des réseaux de transport.

Les graphes utilisés pour représenter des environnements sont en général tels que chaque nœud correspond à un point de l'environnement, et chaque arête entre deux nœuds est associée à une distance entre les deux points correspondants.

Chaque graphe est ainsi susceptible d'être représenté graphiquement par un ensemble de lignes reliant entre eux les points de l'environnement correspondant aux nœuds, cette représentation étant parfois superposée à une représentation graphique de l'environnement.

Dans la suite de cette description, le terme « chemin » est utilisé pour décrire un chemin entre deux points de l'étage E. Le terme « parcours » est, lui, utilisé pour décrire un parcours reliant deux nœuds d'un graphe.

Un parcours entre deux nœuds d'un graphe suit une succession d'arêtes pour relier les deux nœuds correspondants en passant par un ou plusieurs autres nœuds. Des algorithmes permettent, par une exploration du graphe, de déterminer le parcours le plus court entre deux nœuds du graphe, c'est-à-dire le parcours pour lequel la somme des distances associées aux arêtes parcourues par le parcours est la plus faible.

Ainsi, le parcours le plus court entre deux nœuds du graphe est une estimation du chemin le plus court entre les deux points correspondant aux deux nœuds considérés.

Chaque graphe est un graphe des liaisons entre les différentes cellules Z de la cartographie correspondante.

En d'autres termes, chaque graphe contient au moins un nœud pour chaque cellule Z de la de la cartographie correspondante, et au moins une arête pour chaque paire de deux cellules Z contigües et permettant le passage d'une personne T directement de l'une à l'autre des deux cellules Z considérées. Un tel graphe modélise ainsi les cellules Z et leurs liaisons, en ce sens que chaque arête correspond à un mouvement possible d'une entité telle que le dispositif mobile 15 entre les cellules Z correspondant aux nœuds reliés par l'arête.

Chaque nœud correspond à un point d'une cellule Z, ledit point étant au milieu d'un côté de la cellule Z, ou encore à un angle de la cellule Z.

Par exemple, chaque graphe est un graphe ayant un nœud pour chaque côté commun à deux cellules Z, chaque arête reliant deux nœuds appartenant à une même cellule Z.

Chaque arête est associée dans la première mémoire 35 à une distance entre les points correspondant aux nœuds reliés par l'arête considérée.

Chaque distance est, en outre, pondérée en fonction des annotations de la ou les cellules Z correspondantes.

La détermination du chemin initial 165 dans la première cartographie 170 est, par exemple, effectuée par l'application d'un algorithme de Dijkstra sur le premier graphe. En variante, le calcul du chemin initial 165 comprend l'application d'un algorithme A* sur le premier graphe.

L'algorithme de Dijkstra est un algorithme calculant les plus courts parcours entre deux nœuds d'un graphe, ou entre un nœud de départ et chaque nœud du graphe.

L'algorithme A* (prononcé « A étoile », ou « A star ») est un autre algorithme de calcul de plus court parcours entre deux points d'un graphe.

En variante, c'est un algorithme dit « Hamiltonian Fast Marching » qui est utilisé.

En particulier, lors de la détermination du chemin initial 165, un champ de vecteurs est généré en partant du point d'arrivée.

Chaque vecteur est, de manière connue en soi, associé à un nœud du graphe et pointe vers le nœud voisin par lequel passe le parcours le plus court reliant le nœud considéré au point d'arrivée A.

L'algorithme « Field A* » décrit dans l'article « 3D Field D*: Improved Path Planning and Replanning in Three Dimensions » de J. Carsten et al., paru dans les « Proceedings of the 2006 IEEE/RSJ International Conference on Intelligent Robots and Systems October 9 - 15, 2006, Beijing, China » est un exemple d'algorithme générant un tel champ de vecteurs.

La détermination du chemin initial 165 est, en variante, effectuée en fonction des annotations des cellules Z, de manière connue en soi. Dans ce cas la notion de « parcours le plus court » est faite en considérant, pour chaque paire de nœuds voisins, non pas la seule distance entre les points de l'environnement associés aux nœuds considérés, mais un produit entre cette distance et un terme fonction des valeurs associées aux annotations de la cellule Z.

Par exemple, un parcours entre deux nœuds associés à une cellule Z comportant une école est considéré comme représentant une distance 1000 fois supérieure à la même distance dans une cellule Z surplombant un terrain vague, et ainsi de suite.

Optionnellement, chaque nœud d'une cellule Z infranchissable est associé à un vecteur pointant vers le ciel lors de sa première visite. Si toutefois ce nœud est commun avec une cellule Z franchissable explorée ultérieurement lors de la génération du champ de vecteurs, le vecteur pointant vers le ciel est alors remplacé par un vecteur pointant vers le nœud de la cellule franchissable par lequel passe le parcours le plus court.

Selon un cas particulier, si l'un au moins parmi le point de départ D et le point d'arrivée A est dans une cellule infranchissable (par exemple une cellule contenant une partie du sol), les nœuds des cellules contenant ces deux points sont identifiés avant la mise en œuvre de l'étape de génération du champ de vecteurs. Au cours de cette dernière, les nœuds ainsi identifiés sont associés à des vecteurs pointant vers le ciel (pour le point de départ D) et pointant vers le point d'arrivée A (pour les nœuds de la cellule contenant ce point A).

Le champ de vecteur généré est, par exemple, mémorisé dans la première mémoire 35.

Une fois le champ de vecteurs généré pour le premier graphe, le chemin initial 165 est déterminé en suivant, à partir du point de départ D, les vecteurs successifs reliant ce point de départ D au point d'arrivée. Des algorithmes connus, par exemple un algorithme Runge-Kunta, permettent d'obtenir des chemins à partir d'un tel champ de vecteur.

En variante, le chemin initial 165 est une ligne droite reliant le point de départ au point d'arrivée.

La phase d'initialisation 120 est suivi de de la phase d'optimisation 130.

La phase d'optimisation 130 comporte au moins deux étapes d'optimisation 160A, 160B.

Au cours de chaque étape d'optimisation 160A, 160B, un chemin optimisé 175A, 175B, 175C entre le point de départ D et le point d'arrivée A est déterminé par le premier contrôleur 20 à partir d'une cartographie 180A, 180B, 180C appelée « cartographie courante ».

Chaque cartographie courante 180A, 180B, 180C est une cartographie partielle de l'environnement E, c'est-à-dire qu'au moins une portion de l'environnement E n'est pas incluse dans la cartographie courante 180A, 180B, 180C. Ainsi, la taille de la cartographie courante 180A, 108B, 180C est strictement inférieure à celle de la première cartographie 170.

Chaque cartographie courante 180A, 180B, 180C est une cartographie d'un niveau strictement supérieur au premier niveau.

Chaque cartographie courante 180A, 180B, 180C contient soit le chemin optimisé 175A, 175B, 175C calculé lors de l'étape d'optimisation 160A, 160B précédente, si une telle étape d'optimisation 160A, 160B a été mise en œuvre, soit le chemin initial 165 dans le cas contraire. Chaque cartographie courante 180A, 180B, 180C contient donc également le point de départ D et le point d'arrivée A.

En particulier, la cartographie courante 180A, 180B, 180C est générée en fonction soit du chemin optimisé 175A, 175B, 175C calculé lors de l'étape d'optimisation 160A, 160B précédente, si une telle étape d'optimisation 160A, 160B a été mise en œuvre, soit du chemin initial 165 dans le cas contraire.

Il est entendu par « étape X précédente » d'une étape considérée l'étape X mise en œuvre immédiatement avant l'étape considérée, sans qu'aucune étape X n'ait été mise en œuvre dans sa totalité entre l'étape X précédente et l'étape considérée.

De manière générale, chaque cartographie courante 180A, 180B, 180C est une cartographie d'une portion de l'environnement E qui est approximativement centrée sur le chemin en fonction duquel la cartographie courante 180A, 180B, 180C est générée.

Chaque cartographie courante 180A, 180B, 180C est, par exemple, générée dans la première mémoire 35 à partir de la cartographie totale de même niveau.

Chaque cartographie courante 180A, 180B, 180C exclut, par exemple, toute cellule Z de la cartographie totale de même niveau qui est distante d'une distance supérieure ou égale à un seuil prédéterminé du chemin en fonction duquel la cartographie courante 180A, 180B, 180C est générée.

Selon un mode de réalisation, chaque cartographie courante 180A, 180B, 180C comporte au moins, parmi les blocs de cellules Z de la cartographie totale du même niveau, chaque bloc qui contient au moins une portion du chemin 165, 175A, 175B, 175C en fonction duquel la cartographie courante est générée. Optionnellement, chaque cartographie courante 180A, 180B, 180C contient également chaque bloc B qui est en contact avec un bloc B contenant une portion dudit chemin 165, 175A, 175B, 175C.

Selon une variante, chaque cartographie courante 180A, 180B, 180C comporte chaque cellule Z située à une distance inférieure ou égale à un seuil du chemin 165, 175A, 175B, 175C en fonction duquel la cartographie courante 180A, 180B, 180C est générée.

Au cours de chaque étape d'optimisation 160A, 160B, un graphe associé à la cartographie courante 180A, 180B, 180C est généré dans la première mémoire 35, et le chemin optimisé 175A, 175B, 175C est déterminé, comme détaillé précédemment pour le chemin initial 165, à partir du graphe généré.

Deux types d'étapes d'optimisation 160A, 160B sont mis en œuvre.

Au moins une étape d'optimisation est, par exemple, une étape d'optimisation de la précision 160A. Au moins une étape d'optimisation d'exploration 160B est mise en œuvre.

Au moins une étape d'optimisation de la précision 160A est mise en œuvre antérieurement à la mise en œuvre de la première étape d'optimisation d'exploration 160B.

En particulier, les étapes d'optimisation de la précision 160A sont mises en œuvre successivement pour les différents niveaux., et une ou plusieurs étape(s) d'optimisation d'exploration 160B sont mises en œuvre postérieurement à la dernière étape d'optimisation de la précision 160A. Dans ce cas, le nombre d'étape(s) d'optimisation d'exploration 160B est, par exemple, choisi en fonction du temps de calcul disponible pour le dispositif de calcul 10.

Chaque chemin optimisé 175A, 175B, 175C est, par exemple, mémorisé dans la première mémoire 35. Optionnellement, chaque chemin optimisé 175A, 175B, 175C calculé pour une requête remplace, dans la première mémoire 35, le chemin optimisé 175A, 175B, 175C calculé lors de l'étape d'optimisation 160A, 160B précédente.

Au cours de chaque étape d'optimisation de la précision 160A, la cartographie courante 180A, 180B générée est une cartographie du niveau suivant le niveau auquel a été déterminé le chemin en fonction duquel la cartographie courante 180A, 180B a été générée.

Par exemple, une étape d'optimisation de la précision 160A est mise en œuvre pour chaque niveau de cartographie.

Au cours de chaque étape d'optimisation de la précision 160A, la cartographie courante 180A, 180B générée présente une taille strictement inférieure à la taille de la cartographie courante 180A, 180B générée à l'étape 160A, 160B précédente, si elle existe, ou à la taille de la première cartographie 170 dans le cas contraire.

La première étape d'optimisation de la précision 160A comprend une cartographie courante 180A du deuxième niveau qui contient le chemin initial 165 et qui est représentée sur la figure 5.

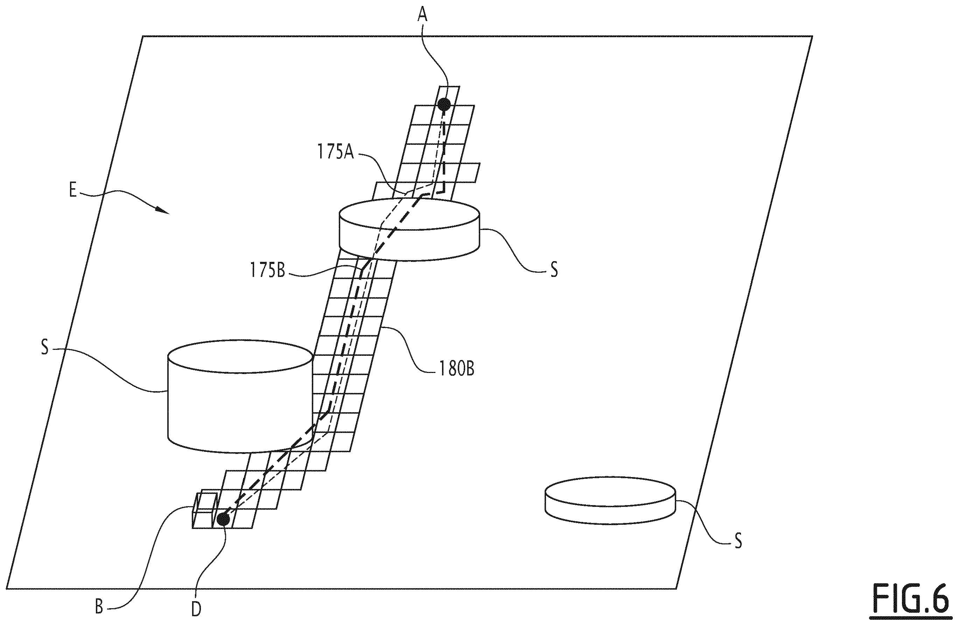

La deuxième étape d'optimisation de la précision 160A comprend une cartographie courante 180B, représentée sur la figure 6, du troisième niveau, qui contient le chemin optimisé 175A généré lors de la première étape d'optimisation de la précision 160A, et ainsi de suite.

Un chemin optimisé 175B est généré à partir de la cartographie courante 180B.

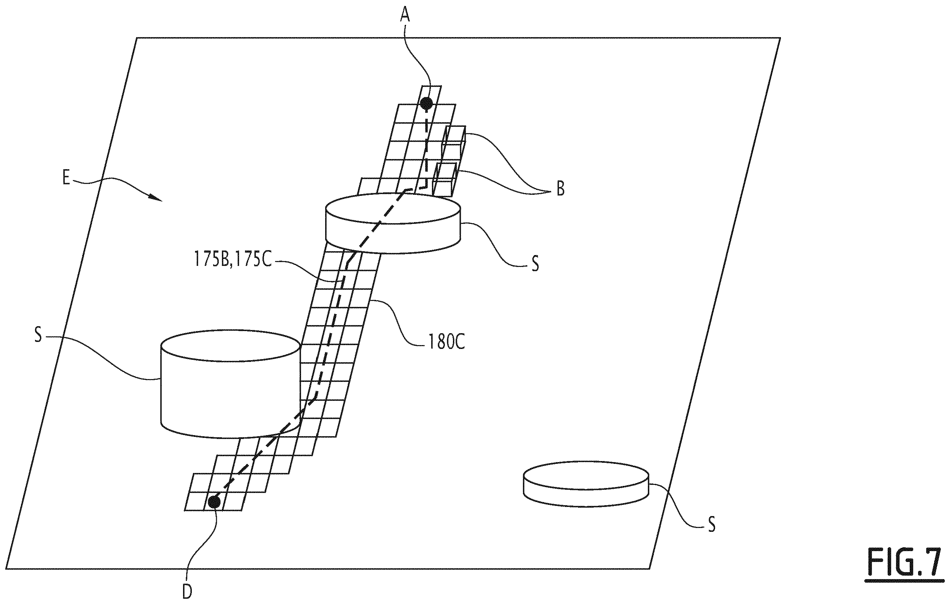

Lors de chaque étape d'optimisation d'exploration 160 B, la cartographie courante 180C est une cartographie du même niveau que la cartographie courante de l'étape d'optimisation 160A, 160B précédente. Un exemple d'une telle cartographie 180C est représenté sur la figure 7.

La cartographie courante 180C de chaque étape d'optimisation d'exploration 160B contient au moins une portion de l'environnement E qui n'était pas contenue dans la cartographie courante de l'étape d'optimisation 160A, 160B précédente.

Par exemple, la cartographie courante 180C de chaque étape d'optimisation d'exploration 160B est obtenue en agrandissant la cartographie courante 180A, 180B, 180C de l'étape d'optimisation 160A, 160B précédente, notamment en ajoutant à la cartographie courante 180A, 180B, 180C de l'étape d'optimisation 160A, 160B précédente au moins un bloc B de cellules Z.

Un exemple de cartographie courante 180C obtenue en rajoutant deux blocs B à la cartographie courante 180B est représentée sur la figure 7.

Un chemin optimisé 175C est obtenu à partir de la cartographie courante 180C.

Il est supposé ici que le chemin optimisé 175 C est identique au chemin optimisé 175B, toutefois ces chemins peuvent différer, par exemple si la cartographie courante 180C contient un raccourci que la cartographie 180B ne contient pas.

Selon un mode de mise en œuvre, si le chemin optimisé 175A, 175B, 175C calculé à l'étape d'optimisation 160A, 160B précédente est au moins partiellement contenu dans un bloc B dont un des voisins ne fait pas partie de la cartographie courante 180A, 180B, 180C de l'étape d'optimisation 160A, 160B précédente, ce bloc B est ajouté dans la cartographie courante 180C de l'étape d'optimisation d'exploration 160 B considérée.

En variante, chaque bloc B en contact avec un bloc B contenu dans la cartographie courante 180A, 180B, 180C de l'étape d'optimisation 160A, 160B précédente est ajouté dans la cartographie courante 180C de l'étape d'optimisation d'exploration 160 B considérée.

Des étapes d'optimisation 160B sont, par exemple, mises en œuvre pour le dernier niveau tant que les chemins optimisés obtenus varient. Dans ce cas, lorsque deux étapes 160B successives ont produit le même chemin optimisé, la phase d'optimisation 130 est, par exemple arrêtée.

En variante, une première étape d'optimisation 160B est mise en œuvre pour une cartographie 180C centrée sur le chemin optimisé 175A, 175B calculé lors de la dernière étape 160A.

Si le chemin optimisé 175C est différent du chemin 175A, 175B sur lequel était centré la cartographie courante 180C, alors une nouvelle cartographie courante 180C, de la même taille ou d'une taille proche de la cartographie 180C initiale est générée, et une nouvelle étape 160B est mise en œuvre pour cette nouvelle cartographie 180C, et ainsi de suite. Si toutefois deux étapes 160B successives utilisant des cartographies 180C de même taille produisent des chemins 175C identiques, alors l'étape 160B suivante utilise une cartographie 180C de taille supérieure, par exemple en ajoutant des blocs B à la dernière cartographie courante 180C en date.

Optionnellement, chaque étape 160A est suivie d'au moins une étape 160B pour le même niveau de cartographie, cette ou ces étapes 160B étant mises en œuvre tant que deux étapes 160A, 160B pour le même niveau donnent des chemins optimisés différents. Une fois que deux étapes 160A, 160B successives pour le même niveau donnent deux chemins 175A, 175B, 175C optimisés identiques, l'étape 160A du niveau suivant est mise en œuvre, et ainsi de suite.

En complément facultatif, la phase d'optimisation 130 est terminée lorsqu'un temps de calcul disponible a été utilisé.

De manière générale, de nombreux critères peuvent être utilisés pour décider de la fin de la phase d'optimisation 130.

A l'issue de la phase d'optimisation 130, il est généré un chemin final. Le chemin final est le chemin optimisé 175A, 175B, 175C qui a été déterminé lors de la dernière étape d'optimisation 160A, 160B.

Optionnellement, le chemin final est simplifié par le premier contrôleur 20, par exemple en indiquant une série de points de passage définissant le chemin final simplifié. Chaque point de passage est un point présentant une importance particulière, par exemple un point où le chemin final présente une inflexion (i.e un virage), un point correspondant au passage entre deux cellules Z présentant des poids très différents, ou encore un point particulièrement proche d'un obstacle.

Le chemin final, simplifié le cas échéant, est transmis par le premier module de communication 25 au dispositif mobile 15.

L'étape de calcul d'un chemin provisoire 140 est optionnelle.

L'étape 140 est mise en œuvre au cours de la phase d'optimisation 130.

En particulier, l'étape 140 est mise en œuvre après qu'au moins une étape d'optimisation de la précision 160A a été mise en œuvre, et avant l'expiration d'au moins une étape d'optimisation 160A, 160B.

L'étape 140 est, ainsi, mise en œuvre antérieurement ou simultanément à une étape d'optimisation 160A, 160B et postérieurement à une étape 160A, 160B précédant ladite étape d'optimisation 160A, 160B.

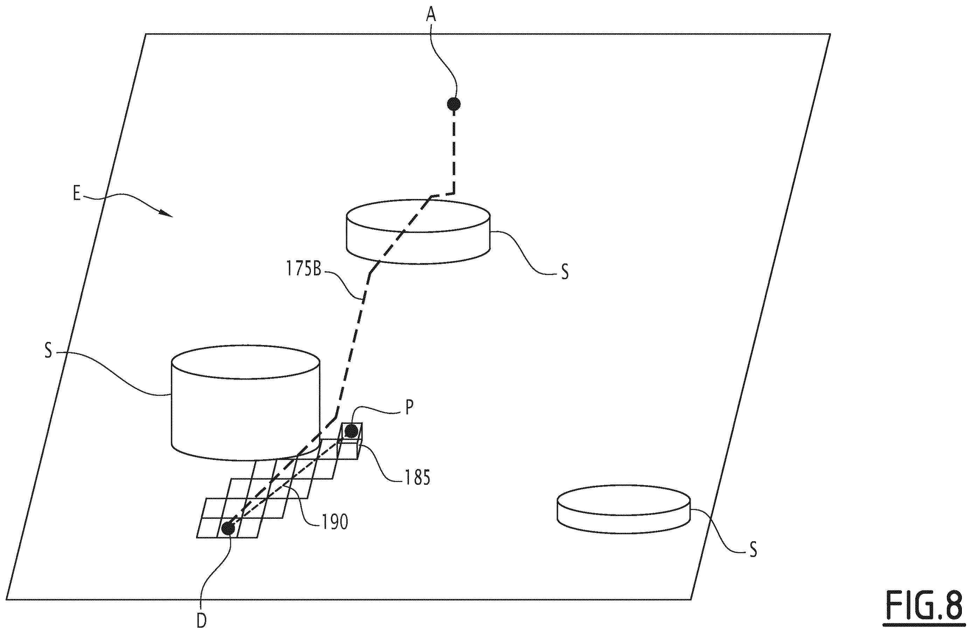

Lors de l'étape 140, une cartographie partielle 185, représentée sur la figure 8, de l'environnement E est générée. Il est supposé sur la figure 8 que l'étape 140 est mise en œuvre postérieurement à l'étape 160 A utilisant la cartographie 180B, mais antérieurement à l'étape 160C utilisant la cartographie 180C.

La cartographie partielle 185 est une cartographie du même niveau que la cartographie courante 180A, 180B, 180C de l'étape d'optimisation 160A, 160B qui va être mise en œuvre après l'étape 140 ou qui est mise en œuvre simultanément à l'étape 140. Ce niveau est un niveau circulable.

La cartographie partielle contient au moins le point de départ D et une portion du chemin optimisé 175A, 175B, 175C généré lors de l'étape 160A, 160B précédente. Cette portion est, notamment, une portion continue, qui n'est pas interrompue à l'intérieur de la cartographie partielle 185.

La cartographie partielle 185 est, notamment, générée en fonction d'un temps de calcul disponible du dispositif de calcul 15. Par exemple, il est déterminé que le dispositif de calcul 15 dispose d'un temps de calcul disponible, et la cartographie partielle 185 est générée de manière à ce que le dispositif de calcul 15 puisse déterminer un chemin entre deux points de la cartographie partielle 185 au cours du temps de calcul disponible.

Au cours de l'étape 140, un chemin provisoire 190 est déterminé. Le chemin provisoire 190 est, par exemple, un chemin entre le point de départ D et un point P d'une enveloppe de la cartographie partielle 185.

Il est entendu par « enveloppe » l'ensemble des points délimitant la cartographie partielle 185.

Le chemin provisoire 190 est, par exemple, un chemin entre le point de départ D et un point P d'intersection entre le chemin optimisé 175A, 175B, 175C généré lors de l'étape 160A, 160B précédente et l'enveloppe de la cartographie partielle 185. En variante, le chemin provisoire 190 est un chemin entre le point de départ D et le point P de l'enveloppe qui est le plus proche à vol d'oiseau du point d'arrivée A.

Le chemin provisoire 190 est, par exemple, calculé de manière similaire aux chemins initial 165 et optimisés 175A, 175B, 175C via la génération d'un champ de vecteurs.

En particulier, le chemin provisoire 190 est calculé en partant du point de départ D. Par exemple, chaque vecteur du champ de vecteurs associé pointe vers le nœud par lequel passe le parcours le plus court reliant au point de départ le nœud associé au vecteur.

Le chemin provisoire 190 est transmis au dispositif mobile 15 via le premier module de communication 25.

Puisque l'étape 140 est mise en œuvre avant qu'au moins une étape d'optimisation 160A, 160B a été complétée, le chemin provisoire 170 est transmis avant le chemin final au dispositif mobile 15.

Au cours de la phase de déplacement 150, au moins une étape 200 de déplacement le long du chemin final est mise en œuvre, et optionnellement une étape 210 de déplacement le long du chemin provisoire 190 si un tel chemin a été transmis au dispositif mobile.

Lors de l'étape 200, le module de pilotage 60 commande un déplacement du dispositif mobile 15 le long du chemin provisoire 190 tant que le chemin final n'a pas été reçu par le dispositif mobile 15.

Après que le chemin final a été reçu par le dispositif mobile 15, le module de pilotage 60 commande le déplacement, au cours de l'étape 210, du dispositif mobile 15 le long du chemin final.

Grâce à l'utilisation de la phase d'initialisation et des étapes d'optimisation 160A, 160B, un chemin final peut être calculé sur une cartographie précise sans nécessiter trop de calculs.

En effet, le calcul du chemin initial 165 sur la cartographie 170 de premier niveau nécessite relativement peu de calculs. Puisque les chemins optimisés 175A, 175B, 175C sont calculés pour des cartographies courantes 180A, 180B, 180C ne représentant qu'une partie de l'environnement E, ces calculs sont également rapides même si les cartographies 180A, 180B, 180C sont bien détaillées.

Puisque les cartographies courantes 180A, 180B, 180C contiennent à chaque fois le chemin 165, 175A, 175B, 175C calculé à l'itération précédente, les chemins calculés à partir de ces cartographies courantes 180A, 180B, 180C sont pertinents. En d'autres termes, les cartographies courantes 180A, 180B, 180C peuvent être sélectionnées de manière optimisée en les centrant sur le chemin calculé à l'itération précédente. En effet, dans la grande majorité des cas, le chemin final calculé sera relativement proche du chemin initial 165, et ce chemin final peut être déterminé en utilisant seulement une cartographie d'une partie de l'environnement E proche du chemin 165.

Ainsi, un chemin final précis est calculé sans nécessiter trop de calcul, comme ce serait le cas si le chemin était calculé à partir par exemple de la cartographie totale du dernier niveau.

L'utilisation d'une pluralité d'étapes 160A d'optimisation de la précision permet d'améliorer la précision du chemin final généré. Le fait de réduire systématiquement la taille des cartographies courantes d'une étape 160A à la suivante permet en outre de limiter le temps de calcul total nécessaire à la mise en œuvre du procédé.

La ou les étapes 160B d'optimisation d'exploration permet là aussi d'améliorer la pertinence du chemin final, en explorant des zones auparavant non explorées, notamment lorsqu'elles sont mises en œuvre pour le dernier niveau, et ainsi espérer détecter un raccourci qui n'aurait pas été détecté auparavant.

Le fait de générer chaque cartographie courante 180A, 180B, 180C à partir des bocs B contenant le chemin optimisé 175A, 175B, 175C ou initial 165 calculé à l'étape précédente, et éventuellement les blocs B voisins de ceux-ci, permet de générer les cartographies courantes 180A, 180B, 180C de manière simple et rapide tout en obtenant des cartographies courantes 180A, 180B, 180C permettant d'obtenir un chemin optimisé 175A, 175B, 175C pertinent avec un temps raisonnable de calcul.

L'étape 140 permet de commencer le déplacement du dispositif 15 sur un chemin moins précis que le chemin final mais néanmoins acceptable, avant que ce chemin final n'ait été calculé.

L'utilisation d'une requête contenant les identifiants des points de départ et d'arrivée ainsi qu'au moins une information relative à une contrainte à prendre en compte permet de réutiliser pour d'autres dispositifs mobiles 15 les chemins ou les champs de vecteurs calculés pour un dispositif mobile 15 spécifique, si ces autres dispositifs mobiles 15 se déplacent entre les mêmes ponts A et D et sont soumis aux mêmes contraintes. Ainsi, les résultats d'au moins une partie des calculs effectués peuvent être réutilisés pour les autres dispositifs 15, et permet également de mettre en pause aisément les calculs pour les reprendre ultérieurement.

L'utilisation de champ de vecteurs stockés en mémoire en particulier permet de générer aisément des chemins reliant des points variés au même point d'arrivée.

Optionnellement, une pluralité de requêtes de calcul du chemin entre le point D et le point A sont générées pour le dispositif mobile 15, par exemple de manière périodique, notamment au cours de la phase de déplacement 150. Chacune de ces requêtes contient, outre les éléments déjà mentionnés, un identifiant de la position courante du dispositif mobile 15 au moment de l'émission de la requête, par exemple des coordonnées spatiales de cette position courante.

Selon un mode de réalisation, le dispositif 10 est configuré pour calculer en parallèle une pluralité de chemins présentant des caractéristiques (points de départ et d'arrivée, contraintes) différentes.

Par exemple, le dispositif 10 est prévu pour recevoir de manière périodique les requêtes générées pour les différents dispositifs 15 pour lesquels on souhaite calculer des chemins, pour déterminer périodiquement un ordre de priorité de chaque requête et pour effectuer, pendant chaque période, tout ou partie des calculs concernant à la ou les requête(s) prioritaire(s).

Par exemple, si plusieurs requêtes sont reçues pour des dispositifs mobiles 15 distincts et contiennent les identifiants de points de départ et d'arrivée identiques ainsi que des contraintes identiques, ces requêtes seront traitées en priorité par le dispositif de calcul 10 par rapport à d'autres requêtes concernant un nombre plus faible de dispositifs 15 distincts.

Selon un mode de réalisation, le dispositif 15 est configuré pour interrompre une étape 160A, 160B d'optimisation en cours lorsqu'une requête plus prioritaire est reçue, pour stocker le résultat des calculs effectuées au moment de l'interruption, et pour reprendre l'étape 160A, 160B d'optimisation interrompue lorsque la requête plus prioritaire a été traitée. Le calcul de champ de vecteurs est alors particulièrement intéressant car ce calcul peut être arrêté à tout moment en mémorisant les vecteurs déjà calculés, et repris ultérieurement à partir de ces vecteurs.

## Revendications

1. Procédé de détermination de chemin entre un point de départ (D) et un point d'arrivée (A) dans un environnement (E), mis en œuvre par un dispositif électronique (10) de calcul de chemin, le procédé comprenant :
- une phase d'initialisation (120), comportant le calcul d'un chemin initial (165) entre le point de départ (D) et le point d'arrivée (A) à partir d'une première cartographie (170) à cellules (Z) de l'environnement (E), les cellules (Z) de la première cartographie (170) présentant une première dimension moyenne, le chemin initial étant déterminé à partir d'un premier graphe de la première cartographie, le premier graphe étant une structure de données formée de nœuds reliés deux à deux par des arêtes, chaque nœud correspondant à un point d'une cellule (Z), ledit point étant au milieu d'un côté de la cellule (Z) ou à un angle de la cellule (Z), et
- une phase d'optimisation (130) comportant au moins deux étapes d'optimisation (160A, 160B), chaque étape d'optimisation (160A, 160B) comportant le calcul d'un chemin optimisé (175A, 175B, 175C) entre le point de départ (D) et le point d'arrivée (A) à partir d'une cartographie courante (180A, 180B, 180C) à cellules (Z) d'une portion de l'environnement (E), les cellules (Z) de la cartographie courante (180A, 180B, 180C) présentant une dimension moyenne strictement inférieure à celle de la première cartographie (170), chaque cartographie courante (180A, 180B, 180C) contenant le chemin optimisé (175A, 175B, 175C) calculé à l'étape d'optimisation (160A, 160B) précédente, si cette étape existe, ou contenant le chemin initial (165) dans le cas contraire, chaque chemin optimisé étant déterminé à partir d'un graphe associé à la cartographie courante, chaque graphe associé à la cartographie courante étant une structure de données formée de nœuds reliés deux à deux par des arêtes, chaque nœud correspondant à un point d'une cellule (Z), ledit point étant au milieu d'un côté de la cellule (Z) ou à un angle de la cellule (Z)
**caractérisé en ce que** lesdites au moins deux étapes d'optimisation (160A, 160B) comportent au moins une étape d'optimisation étant une étape d'optimisation d'exploration (160B) lors de laquelle la cartographie courante (180C) présente une dimension moyenne de cellule identique à la dimension moyenne de la cartographie courante (180A, 180B, 180C) de l'étape d'optimisation (160A, 160B) précédente, la cartographie courante (180C) de l'étape d'optimisation d'exploration (160B) comprenant au moins une portion de l'environnement (E) non cartographiée dans la cartographie courante (180A, 180B, 180C) de l'étape d'optimisation (160A, 160B) précédente.

2. Procédé selon la revendication 1, dans lequel lesdites au moins deux étapes d'optimisation (160A, 160B) comportent une étape d'optimisation de la précision (160A) au cours de laquelle la cartographie courante (180A, 180B, 180C) présente une dimension moyenne de cellules (Z) strictement inférieure à celle de la cartographie courante (180A, 180B, 180C) de l'étape d'optimisation (160A, 160B) précédente, si elle existe, ou de la première cartographie (170) dans le cas contraire.

3. Procédé selon la revendication 2, dans lequel chaque cartographie (170, 180A, 180B, 180C) présente une taille et, lors de chaque étape d'optimisation de la précision (160A), la taille de la cartographie courante est (180A, 180B, 180C) strictement inférieure à la taille de l'étape d'optimisation (160A, 160B) précédente.

4. Procédé selon l'une quelconque des revendications précédentes, dans lequel un rapport entre les dimensions moyennes des cellules (Z) de deux étapes successives d'optimisation de la précision (160A, 160B) est compris entre 2 et 10.

5. Procédé selon l'une quelconque des revendications 2 à 4, dans lequel le dispositif électronique de calcul de chemin (15) contient une mémoire (35) comprenant, pour chaque dimension moyenne de cellule (Z), une cartographie totale à cellules (Z) de l'environnement (E), chaque cartographie totale présentant ladite dimension moyenne de cellule et étant divisée en un ensemble de blocs (B) de cellules (Z), les blocs (B) étant délimités par une grille régulière, chaque cellule (Z) étant incluse dans un unique bloc (B), chaque cartographie courante (180A, 180B, 180C) comprenant chaque bloc (B) de la cartographie totale de même dimension moyenne qui intersecte le chemin optimisé (175A, 175B, 175C) calculé à l'étape d'optimisation (160A, 160B, 160C) précédente, si cette étape existe, ou qui intersecte le chemin initial (165) dans le cas contraire
et optionnellement, contenant chaque bloc (B) de la cartographie totale de même dimension moyenne en contact avec un bloc (B) qui intersecte ce chemin (165, 175A, 175B, 175C).

6. Procédé selon l'une quelconque des revendications 2 à 5, dans lequel la phase d'optimisation (130) comporte une pluralité d'étapes d'optimisation de la précision (160A) successives et au moins une étape d'optimisation d'exploration (160B), chaque étape d'optimisation d'exploration (160B) étant mise en oeuvre postérieurement à la dernière étape d'optimisation de la précision (160A).

7. Procédé selon l'une quelconque des revendications précédentes, dans lequel chaque chemin initial (165) ou optimisé (175A, 175B, 175C) est calculé en partant du point d'arrivée (A).

8. Procédé selon l'une quelconque des revendications précédentes, comportant, en outre, une étape de transmission d'un chemin optimisé (175A, 175B, 175C) à une entité mobile (15), et une étape de déplacement (150) de l'entité mobile le long du chemin (175A, 175B, 175C) transmis.

9. Procédé selon la revendication 8, dans lequel chaque cartographie (170, 180A, 180B, 180C) présente une taille et comportant, en outre, antérieurement à au moins une étape d'optimisation (160A, 160B), une étape de calcul (140) d'un chemin provisoire (190) à partir d'une cartographie partielle (185) de l'environnement (E), la cartographie partielle (185) contenant le point de départ (D) et une partie du chemin optimisé (175A, 175B, 175C) calculé lors de l'étape d'optimisation (160A, 160B) la plus récente, la partie du chemin s'étendant continûment à partir du point de départ (D), le chemin partiel (190) étant un chemin entre le point de départ (D) et un point de la cartographie partielle (185), une taille de la cartographie partielle (185) étant strictement inférieure à la taille de la cartographie courante (180A, 180B, 180C) précédente,
l'étape de déplacement (150) comportant le déplacement (200) de l'entité mobile (15) le long du chemin provisoire (190) tant que le chemin optimisé (175A, 175B, 175C) n'a pas été reçu par l'entité mobile (15), et le déplacement (210) de l'entité mobile (15) le long du chemin optimisé (175A, 175B, 175C) transmis après que le chemin optimisé (175A, 175B, 175C) a été reçu par l'entité mobile (15).

10. Procédé selon la revendication 8 ou 9, comportant, en outre, une étape de transmission au dispositif électronique de calcul de chemin (10) d'une requête de calcul d'au moins un chemin entre le point de départ (D) et le point d'arrivée (E), la requête étant mémorisée dans une mémoire (35) du dispositif électronique de calcul (10), chaque requête comportant des identifiants du point de départ (D) et du point d'arrivée (A) et au moins une information relative à une contrainte à prendre en compte dans le calcul du chemin, chaque chemin calculé étant stocké et associé à la requête dans la mémoire (35).

11. Produit programme d'ordinateur comportant des instructions logicielles configurées pour mettre en œuvre un procédé selon l'une quelconque des revendications précédentes lorsqu'elles sont exécutées sur un processeur (30).

12. Support d'informations (40) comportant des instructions logicielles configurées pour mettre en œuvre un procédé selon l'une quelconque des revendications 1 à 10 lorsqu'elles sont exécutées sur un processeur (30).

13. Dispositif électronique de calcul (10) configuré pour mettre en œuvre un procédé selon l'une quelconque des revendications 1 à 10.

## Patentansprüche

1. Verfahren zum Bestimmen eines Wegs zwischen einem Startpunkt (D) und einem Zielpunkt (A) in einer Umgebung (E), implementiert von einer elektronischen Vorrichtung (10) zur Wegberechnung, das Verfahren umfassend:
- eine Initialisierungsphase (120), umfassend die Berechnung eines Anfangswegs (165) zwischen dem Startpunkt (D) und dem Zielpunkt (A) anhand einer ersten Kartografie (170) mit Zellen (Z) der Umgebung (E), wobei die Zellen (Z) der ersten Kartografie (170) eine erste mittlere Dimension aufweisen, der Anfangsweg anhand eines ersten Graphen der ersten Kartografie bestimmt wird, wobei der erste Graph eine Datenstruktur ist, die aus Knoten gebildet ist, die paarweise durch Kanten verbunden sind, wobei jeder Knoten einem Punkt einer Zelle (Z) entspricht, der Punkt in der Mitte einer Seite der Zelle (Z) oder an einer Ecke der Zelle (Z) ist, und
- eine Optimierungsphase (130), umfassend mindestens zwei Optimierungsschritte (160A, 160B), jeder Optimierungsschritt (160A, 160B) umfassend das Berechnen eines optimierten Wegs (175A, 175B, 175C) zwischen dem Startpunkt (D) und dem Zielpunkt (A) anhand einer aktuellen Kartierung (180A, 180B, 180C) mit Zellen (Z) eines Abschnitts der Umgebung (E), wobei die Zellen (Z) der aktuellen Kartierung (180A, 180B, 180C) eine mittlere Abmessung aufweisen, die strikt kleiner ist als die der ersten Kartierung (170), jede aktuelle Kartierung (180A, 180B, 180C) den optimierten Weg (175A, 175B, 175C) enthält, der im vorherigen Optimierungsschritt (160A, 160B) berechnet wurde, wenn dieser Schritt existiert, oder im gegenteiligen Fall den Anfangsweg (165) enthält, wobei jeder optimierte Weg anhand eines Graphen bestimmt wird, der mit der aktuellen Kartierung assoziiert ist, wobei jeder Graph, der mit der aktuellen Kartierung assoziiert ist, eine Datenstruktur ist, die aus Knoten gebildet ist, die paarweise durch Kanten verbunden sind, jeder Knoten einem Punkt in einer Zelle (Z) entspricht, wobei der Punkt in der Mitte einer Seite der Zelle (Z) oder an einer Ecke der Zelle (Z) ist,
**dadurch gekennzeichnet, dass**
die mindestens zwei Optimierungsschritte (160A, 160B) mindestens einen Optimierungsschritt umfassen, der ein Abtastoptimierungsschritt (160B) ist, bei dem die aktuelle Kartierung (180C) eine durchschnittliche Zellgröße aufweist, die gleich ist wie die durchschnittliche Größe der aktuellen Kartierung (180A, 180B, 180C) des vorherigen Optimierungsschritts (160A, 160B), die aktuelle Kartographie (180C) des Abtastoptimierungsschritts (160B) mindestens einen Teil der Umgebung (E) umfasst, der nicht in der aktuellen Kartierung (180A, 180B, 180C) des vorherigen Optimierungsschritts (160A, 160B) kartiert worden ist.

2. Verfahren nach Anspruch 1, wobei die mindestens zwei Optimierungsschritte (160A, 160B) einen Optimierungsschritt der Präzision (160A) umfassen, in dem die aktuelle Kartierung (180A, 180B, 180C) eine mittlere Zellgröße (Z) aufweist, die strikt kleiner ist als die der aktuellen Kartierung (180A, 180B, 180C) des vorherigen Optimierungsschritts (160A, 160B), falls vorhanden, oder der ersten Kartierung (170) im gegenteiligen Fall.

3. Verfahren nach Anspruch 2, wobei jede Kartierung (170, 180A, 180B, 180C) eine Größe aufweist und in jedem Optimierungsschritt der Präzision (160A) die Größe der aktuellen Kartierung (180A, 180B, 180C) strikt kleiner ist als die Größe des vorherigen Optimierungsschritts (160A, 160B).

4. Verfahren nach einem der vorherigen Ansprüche, wobei ein Verhältnis zwischen den mittleren Abmessungen der Zellen (Z) von zwei aufeinanderfolgenden Optimierungsschritten der Präzision (160A, 160B) zwischen 2 und 10 liegt.

5. Verfahren nach einem der Ansprüche 2 bis 4, wobei die elektronische Wegberechnungsvorrichtung (15) einen Speicher (35) enthält, umfassend für jede durchschnittliche Zellengröße (Z) eine gesamte Kartographie mit Zellen (Z) der Umgebung (E), wobei jede gesamte Kartographie die durchschnittliche Zellengröße aufweist und in einen Satz von Blöcken (B) von Zellen (Z) unterteilt ist, wobei die Blöcke (B) durch ein regelmäßiges Gitter begrenzt sind und jede Zelle (Z) in einem einzigen Block (B) beinhaltet ist,
jede aktuelle Kartierung (180A, 180B, 180C) umfassend jeden Block (B) der gesamten Kartierung mit derselben durchschnittlichen Größe, der den optimierten Weg (175A, 175B, 175C) schneidet, der in dem vorherigen Optimierungsschritt (160A, 160B, 160C) berechnet wurde, wenn dieser Schritt existiert, oder im gegenteiligen Fall den ursprünglichen Weg (165) schneidet,
und optional jeden Block (B) der gesamten Kartographie mit derselben durchschnittlichen Abmessung in Kontakt mit einem Block (B) enthält, der diesen Weg (165, 175A, 175B, 175C) schneidet.

6. Verfahren nach einem der Ansprüche 2 bis 5, wobei die Optimierungsphase (130) eine Vielzahl von aufeinanderfolgenden Optimierungsschritten der Präzision (160A) und mindestens einen Abtastoptimierungsschritt (160B) umfasst, wobei jeder Abtastoptimierungsschritt (160B) nach dem letzten Optimierungsschritt der Präzision (160A) implementiert wird.

7. Verfahren nach einem der vorherigen Ansprüche, wobei jeder Anfangsweg (165) oder optimierte Weg (175A, 175B, 175C) ausgehend von dem Zielpunkt (A) berechnet wird.

8. Verfahren nach einem der vorherigen Ansprüche, ferner umfassend einen Schritt einen Übertragungsschritt eines optimierten Wegs (175A, 175B, 175C) an eine mobile Entität (15) und einen Bewegungsschritt (150) der mobilen Entität entlang des übertragenen Wegs (175A, 175B, 175C).

9. Verfahren nach Anspruch 8, wobei jede Kartierung (170, 180A, 180B, 180C) eine Größe aufweist und ferner vor mindestens einem Optimierungsschritt (160A, 160B) einen Berechnungsschritt (140) eines provisorischen Wegs (190) anhand einer teilweisen Kartierung (185) der Umgebung (E) umfasst, wobei die teilweise Kartierung (185) den Startpunkt (D) und einen Teil des optimierten Wegs (175A, 175B, 175C) enthält, der in dem letzten Optimierungsschritt (160A, 160B) berechnet wurde, wobei sich der Teil des Wegs kontinuierlich von dem Startpunkt (D) erstreckt, wobei der Teilweg (190) ein Weg zwischen dem Startpunkt (D) und einem Punkt auf der teilweisen Kartierung (185) ist, eine Größe der Teilabbildung (185) strikt kleiner ist als die Größe der vorherigen aktuellen Kartierung (180A, 180B, 180C),
der Bewegungsschritt (150) umfassend das Bewegen (200) der mobilen Entität (15) entlang des provisorischen Wegs (190), solange der optimierte Weg (175A, 175B, 175C) nicht von der mobilen Entität (15) empfangen wurde, und das Bewegen (210) der mobilen Entität (15) entlang des optimierten Wegs (175A, 175B, 175C), der gesendet wurde, nachdem der optimierte Weg (175A, 175B, 175C) von der mobilen Entität (15) empfangen wurde.

10. Verfahren nach Anspruch 8 oder 9, ferner umfassend einen Übertragungsschritt einer Anforderung zur Berechnung mindestens eines Wegs zwischen dem Startpunkt (D) und dem Zielpunkt (E) an die elektronische Wegberechnungsvorrichtung (10), wobei die Anforderung in einem Speicher (35) der elektronischen Rechenvorrichtung (10) gespeichert wird, wobei jede Anforderung Kennungen des Startpunkts (D) und des Zielpunkts (A) und mindestens Informationen bezüglich einer Einschränkung umfasst, die bei der Berechnung des Wegs berücksichtigt werden soll, wobei jeder berechnete Weg in dem Speicher (35) gespeichert und mit der Abfrage assoziiert wird.

11. Computerprogrammprodukt, umfassend Softwareanweisungen, die konfiguriert sind, um ein Verfahren nach einem der vorherigen Ansprüche zu implementieren, wenn sie auf einem Prozessor (30) ausgeführt werden.

12. Datenträger (40), umfassend Softwareanweisungen, die konfiguriert sind, um ein Verfahren nach einem der Ansprüche 1 bis 10 zu implementieren, wenn sie auf einem Prozessor (30) ausgeführt werden.

13. Elektronische Rechenvorrichtung (10), die konfiguriert ist, um ein Verfahren nach einem der Ansprüche 1 bis 10 zu implementieren.

## Claims

1. Method of determining a path between a departure point (D) and an arrival point (A) in an environment (E), implemented by an electronic pathfinding device (10), the method comprising:
- an initialisation phase (120), comprising the calculation of an initial path (165) between the departure point (D) and the arrival point (A) on the basis of an initial map (170) with cells (Z) of the environment (E), the cells (Z) of the initial map (170) having a first average dimension, the initial path being determined from a first graph of the initial map, the first graph being a data structure formed of nodes connected in pairs by edges, each node corresponding to a point of a cell (Z), said point being in the middle of a side of the cell (Z) or at a corner of the cell (Z), and
- an optimisation phase (130) comprising at least two optimisation steps (160A, 160B), each optimisation step (160A, 160B) comprising the calculation of an optimised path (175A, 175B, 175C) between the departure point (D) and the arrival point (A) on the basis of a current map (180A, 180B, 180C) with cells (Z) of a portion of the environment (E), the cells (Z) of the current map (180A, 180B, 180C) having an average dimension strictly smaller than that of the initial map (170), each current map (180A, 180B, 180C) containing the optimised path (175A, 175B, 175C) calculated in the preceding optimisation step (160A, 160B), if this step exists, or containing the initial path (165) otherwise, each optimised path being determined from a graph associated with the current map, each graph associated with the current map being a data structure formed of nodes connected in pairs by edges, each node corresponding to a point of a cell (Z), that point being in the middle of a side of the cell (Z) or at a corner of the cell (Z)
**characterised in that**
said at least two optimisation steps (160A, 160B) comprise at least one optimisation step being an exploration optimisation step (160B) during which the current map (180C) has an average cell dimension identical to the average dimension of the current map (180A, 180B, 180C) of the preceding optimisation step (160A, 160B), the current map (180C) of the exploration optimisation step (160B) comprising at least one portion of the environment (E) not mapped in the current map (180A, 180B, 180C) of the preceding optimisation step (160A, 160B).

2. Method according to claim 1, wherein said at least two optimisation steps (160A, 160B) include a precision optimisation step (160A) during which the current map (180A, 180B, 180C) has an average cell size (Z) strictly smaller than that of the current map (180A, 180B, 180C) of the preceding optimisation step (160A, 160B), if any, or of the initial map (170) otherwise.

3. Method according to claim 2, in which each map (170, 180A, 180B, 180C) has a size and, during each accuracy optimisation step (160A), the size of the current map is (180A, 180B, 180C) strictly smaller than the size of the previous optimisation step (160A, 160B).

4. A method according to any one of the preceding claims, wherein a ratio between the average dimensions of the cells (Z) of two successive precision optimisation steps (160A, 160B) is between 2 and 10.

5. Method according to any one of claims 2 to 4, in which the electronic pathfinding device (15) contains a memory (35) comprising, for each average cell dimension (Z), a full map with cells (Z) of the environment (E), each full map having said average cell dimension and being divided into a set of blocks (B) of cells (Z), the blocks (B) being delimited by a regular grid, each cell (Z) being included in a single block (B),
each current map (180A, 180B, 180C) comprising each block (B) of the full map with the same average dimension which intersects the optimised path (175A, 175B, 175C) calculated in the preceding optimisation step (160A, 160B, 160C), if this step exists, or which intersects the initial path (165) otherwise
and optionally, containing each block (B) of the entire map that has the same average size and is in contact with a block (B) intersecting this path (165, 175A, 175B, 175C).

6. Method according to any one of claims 2 to 5, in which the optimisation phase (130) comprises many successive precision optimisation steps (160A) and at least one exploration optimisation step (160B), each exploration optimisation step (160B) being implemented after the last precision optimisation step (160A).

7. Method according to any one of the preceding claims, in which each initial (165) or optimised path (175A, 175B, 175C) is calculated starting from the arrival point (A).

8. Method according to any one of the preceding claims, further comprising a step of transmitting an optimised path (175A, 175B, 175C) to a mobile entity (15), and a step of moving (150) the mobile entity along the path (175A, 175B, 175C) transmitted.

9. Method according to claim 8, in which each map (170, 180A, 180B, 180C) has a size and further comprises, prior to at least one optimisation step (160A, 160B), a calculation step (140) for calculating a provisional path (190) from a partial map (185) of the environment (E), the partial map (185) containing the departure point (D) and a part of the optimised path (175A, 175B, 175C) calculated during the most recent optimisation step (160A, 160B), the part of the path extending continuously from the departure point (D), the partial path (190) being a path between the departure point (D) and a point of the partial map (185), the size of the partial map (185) being strictly smaller than the size of the previous map (180A, 180B, 180C),
the moving step (150) comprising movement (200) of the mobile entity (15) along the provisional path (190) as long as the optimised path (175A, 175B, 175C) has not been received by the mobile entity (15), and movement (210) of the mobile entity (15) along the optimised path (175A, 175B, 175C) transmitted after the optimised path (175A, 175B, 175C) has been received by the mobile entity (15).

10. Method according to claim 8 or 9, further comprising a step of transmitting to the electronic pathfinding device (10) a request for calculation of at least one path between the departure point (D) and the arrival point (E), the request being stored in a memory (35) of the electronic calculation device (10), each request comprising identifiers of the departure point (D) and of the arrival point (A) and at least one piece of information relating to a constraint to be taken into account in calculating the path, each calculated path being stored and associated with the request in the memory (35).

11. Computer program product comprising software instructions configured to implement a method according to any one of the preceding claims when executed on a processor (30).

12. Information medium (40) comprising software instructions configured to implement a method according to any one of claims 1 to 10 when they are executed on a processor (30).

13. Electronic calculation device (10) configured to implement a method according to any one of claims 1 to 10.
